# EUROPÄISCHE PATENTSCHRIFT

(11) **EP 3 146 271 B1**
(45) Veröffentlichungstag und Bekanntmachung des Hinweises auf die Patenterteilung: **26.08.2020**
(21) Anmeldenummer: 15726079.5
(22) Anmeldetag: 22.05.2015
(51) Int. Cl.: F24F 5/00, F24D 3/14

(54) **VERFAHREN ZUM KÜHLEN EINES RAUMES**
METHOD FOR COOLING A ROOM
PROCÉDÉ DE REFROIDISSEMENT D'UNE PIÈCE

(30) Priorität: 23.05.2014 DE 102014107301
(43) Veröffentlichungstag der Anmeldung: 29.03.2017
(73) Patentinhaber: Baronin von der Ropp, Freya Angela, 14057 Berlin (DE); Baron von der Ropp, Georg Dietrich, 22303 Hamburg (DE); Baron von der Ropp, Hanns Christoph, 10627 Berlin (DE); Baronin von der Ropp, Rania Dorothea, 10178 Berlin (DE)
(72) Erfinder: BARON VON DER ROPP, Dietrich, 14057 Berlin (DE)
(74) Vertreter: von dem Borne, Andreas
(86) Internationale Anmeldenummer: PCT/EP2015/061451
(87) Internationale Veröffentlichungsnummer: WO 2015/177358

(56) Entgegenhaltungen:
- EP-A1- 0 140 974
- EP-A1- 1 669 682
- WO-A1-2012/057695
- DE-A1- 4 036 520
- DE-A1-102012 005 655

## Beschreibung

Die Erfindung betrifft ein Verfahren zum Kühlen eines Raumes mit einer wärmedämmenden Grundplatte, die auf ihrer dem Raum zugewandten Oberfläche fixierte Kapillarrohre aufweist, durch die ein Temperiermedium leitbar ist, und mit einer die Oberfläche der Grundplatte mit dem Kapillarrohren abdeckenden Schicht. Das Temperierelement wird bevorzugt als Kühlelement und folglich zum Kühlen eines Raumes eingesetzt.

### Stand der Technik

Die bekannten Temperierelemente sind in der Regel als Heizelemente ausgebildet und folglich für das Heizen von Räumen ausgelegt.

So ist z. B. aus der DE 41 06 200 C1 ein als Heizelement (Heizmodul) ausgebildetes Temperierelement für Decken oder Wände eines zu heizenden Raumes bekannt. Das Heizmodul weist eine wärmedämmende Grundplatte (Tragplatte) auf, die als eine Hartschaumplatte, Holzplatte oder Holzfaserplatte ausgebildet ist. Auf der dem Raum zugewandten Oberfläche ist eine Kapillarrohrmatte beispielsweise durch Heften fixiert. Die Oberfläche der Grundplatte und die Kapillarrohre sind von einer Füllschicht aus einem wärmeleitfähigen Material mit Klebeeigenschaften abgedeckt, wobei auf der Füllschicht eine Deckplatte aufgeklebt ist. Als Deckplatten werden beispielsweise zement-, kalk- oder gipsgebundene Span- oder Faserplatten oder Platten aus Gipskarton genannt.

Weiterhein ist aus der DE 197 20 863 A1 ein als Heiz- und Kühlelement ausgebildetes Temperierelement für Decken oder Wände eines zu temperierenden Raumes bekannt. Das bekannte Temperierelement weist eine wärmedämmende Grundplatte auf, die auf ihrer dem Raum zugewandten Oberfläche in parallelen Längsnuten angeordnete Kapillarrohre aufweist. Die Oberfläche der Grundplatte mit den Kapillarrohren ist von einer wärmeleitenden zweiten Platte aus Gips, Metall, Glas, Kunststoff oder Holz abgedeckt.

Ferner beschreibt die DE 10 2004 050 207 A1 einen Innenwandaufbau zur Innendämmung von Gebäudeaußenwänden, wobei eine Innendämmung auf der Innenseite der Außenwand anliegt, auf der innenseitig eine Innenwandschicht angeordnet ist. Innerhalb der Innenwandschicht befinden sich eine Vielzahl von Rohren, die mit einem flüssigen Heiz- oder Kühlmedium beaufschlagbar sind. Die Innendämmung kann dabei aus einem Mineralschaumstein und/oder aus Gasbeton und/oder aus einem Tonbaustoff mit poröser Struktur bestehen. Die im Mineralschaumstein der Innendämmung enthaltenen Silikatmineralien können im Wesentlichen aus Alkali-Silikaten und/oder Erd-Alkali-Silikaten und/oder Aluminiumoxid-Silikaten bestehen. Das Material der Innenwandschicht, welches die Kapillarrohre umgibt, soll vorzugsweise Kalk- oder Lehmputz sein. Im Vordergrund steht dabei der Einsatz als Heizelement, denn zur Aufnahme des bei extrem tiefen Außentemperaturen entstehenden Tauwassers soll die zwischen der temperierbaren Innenwandschicht und der Außenwand liegenden Innendämmung als Feuchtpuffer wirken.

DE 40 36 520 A1 beschreibt weiterhin ein Kühlelement mit einer wärmedämmenden Grundplatte, die Kapillarrohre aufweist, durch die ein Kühlmedium geleitet wird, wobei die Grundplatte aus einem hygroskopischen Material ausgebildet ist.

DE 10 2012 005 655 A1 beschreibt auch einen Wärmetauscher mit einer wärmedämmenden Grundplatte mit Kapillarrohren, durch die ein Kühlmedium leitbar ist, wobei die Grundplatte aus Kalziumsilikat ausgebildet ist, und die Grundplatte mit einer Lehmputzschicht versehen ist.

Nachteilig bei den bekannten Temperierelementen und Verfahren ist, dass - soweit sie zur Kühlung eingesetzt werden - es in Klimaregionen mit erhöhtem Kühlbedarf sehr schnell zu einer Taupunktunterschreitung kommt und die Kühlung abgeschaltet werden muss, damit das Kondensat, das wegen des durch die Kapillarrohre strömenden kalten Wassers bzw. Kühlmediums um die Kapillarohre außen herum entsteht, nicht von der Decke tropft oder an den Wänden herunterläuft oder es zumindest sehr schnell zu einer Schimmelbildung kommen kann. Diese Probleme stellen sich insbesondere in Regionen mit hohen Temperaturen und hoher Luftfeuchtigkeit, in welchen auch über einen mehrwöchigen Zeitraum hoher Kühlbedarf besteht, um in Wohn- und Arbeitsräumen ein angenehmes Klima zu schaffen. Aus diesem Grund kommen die bekannten Temperierelemente in solchen Regionen nicht zum Einsatz. Die hohen Kühlleistungen werden in der Praxis stattdessen mit herkömmlichen Klimaanlagen (Aircondtion) erbracht. Nachteilig ist bei solchen Anlagen jedoch der enorme Energieverbrauch. Im Übrigen lässt sich damit auch kein angenehmes Raumklima schaffen. - Hier setzt die Erfindung ein.

### Aufgabenstellung

Es ist die Aufgabe der vorliegenden Erfindung, die bekannten Temperierverfahren so zu verbessern, dass sie auch bei erhöhtem Kühlbedarf über einen relativ langen Zeitraum eingesetzt werden können, und zwar bevorzugt in Regionen mit hohen Temperaturen und hoher relativer Luftfeuchtigkeit.

### Darlegung der Erfindung

Diese Aufgabe wird in Verbindung mit den Merkmalen des Oberbegriffs von Anspruch 1 gelöst.

Gegenstand der Erfindung ist ein Verfahren gemäß Anspruch 1 zum Kühlen eines Raumes mit einem als Kühlelement ausgebildeten Temperierelement der beschriebenen Art, wobei mit der Kühltemperatur (im Bereich der Oberfläche des Temperierelementes) der Taupunkt (der Raumluft bzw. Zuluft) unterschritten wird und wobei das dabei entstehende Kondensat von der abdeckenden Schicht und der Grundplatte aufgenommen wird. Bei abgeschalteter Kühlung wird das Kondensat bzw. die Feuchtigkeit wieder in den Raum abgegeben.

Durch die Ausbildung der Grundplatte aus einem hygroskopischen Material bildet die Grundplatte einen relativ großen Speicher für das entstehende Kondenswasser, das bei ausgeschalteter Kühlung und ggf. im Heizbetrieb (beispielsweise Nachts) wieder an die Umgebung abgegeben werden kann. Selbst bei einer erheblichen und länger andauernder Taupunktunterschreitung können so relativ große Kondensatmengen aufgenommen und diese, wenn das System keine Kühlfunktionen erfüllen muss, wieder abgegeben werden. Dieser Prozess ist ewig reversibel. Die Grundplatte dient dabei als reversibler Feuchtespeicher, deren Feuchtekapazität mehr als das Zweifache des Eigengewichts beträgt.

Bevorzugte Ausführungsformen sind Gegenstand der abhängigen Ansprüche.

Gemäß einer bevorzugten Ausführungsform der Erfindung ist die Grundplatte aus Kalziumsilikat ausgebildet. Kalziumsilikat ist ein überwiegend mineralischer Baustoff, der aus Siliziumdioxid, Kalziumoxid, Wasserglas und Zellulose besteht und mit Hilfe von Wasserdampf gehärtet ist. Kalziumsilikat hat sich für die erfindungsgemäße Verwendung als besonders geeignet erwiesen.

Gemäß einer weiteren bevorzugten Ausführungsform der Erfindung ist die Grundplatte aus Porenbeton ausgebildet. Porenbeton (früher: Gasbeton) ist ein hochporöser, mineralischer Baustoff auf der Grundlage von Kalk-, Kalkzement- oder Zementmörtel, der durch Blähen porosiert und grundsätzlich einer Dampfhärtung unterzogen ist. Porenbeton hat sich für die erfindungsgemäße Verwendung ebenfalls als geeignet erwiesen und hat den Vorteil, dass er preiswerter ist.

Jedenfalls wird bevorzugt eine mineralische Grundplatte verwendet. Die hochhygroskopische und zugleich dämmende mineralische Grundplatte quillt bei Feuchteaufnahme bzw. Abgabe nicht auf und sie schwindet auch nicht. Der pH-Wert der Grundplatte liegt deutlich über 8, so dass auch bei längerer Durchfeuchtung keine Besiedelung von biologischen Keimen zu befürchten ist.

Nach einer weiteren bevorzugten Ausführungsform der Erfindung weist die Grundplatte auf ihrer dem Raum zugewandten Oberfläche Ausformungen auf, die die Kapillarrohre mindestens teilweise aufnehmen. Bevorzugt sind die Ausformungen als parallele Nuten ausgebildet, in die die Kapillarrohre oder Kapillarrohrmatten relativ einfach eingelegt werden können. In diesen Nuten können Kapillarrohre z. B. mit einem Kleber fixiert werden.

Gemäß einer bevorzugten Ausführungsform der Erfindung sind die Kapillarrohre als Matten ausgebildet, deren parallele Kapillarrohre an ihren Zuflussenden mit einem quer verlaufenden Zuflussrohr und an ihren Abflussenden mit einem quer verlaufenden Abflussrohr verbunden werden können. Dabei können die Kapillarrohre an einem Ende der Platte u-förmige Schleifen bilden und am gegenüberliegenden anderen Ende verlaufen das Zuflussrohr und das Abflussrohr parallel nebeneinander. Bevorzugt sind das Zuflussrohr einerseits und das Abflussrohr andererseits an gegenüberliegenden Enden des Elementes angeordnet, so dass dann auf U-förmige Schleifen verzichtet werden kann. Bevorzugt sind die Kapillarrohrmatten aus Polypropylen (PP) ausgebildet.

Gemäß einer besonders bevorzugten Ausführungsform der Erfindung ist die die Kapillarrohre aufweisende Oberfläche der Grundplatte mit einer Schicht abgedeckt, die als eine Lehmputzschicht ausgebildet ist.

Wegen seiner feuchtigkeitsregulierenden Eigenschaften und seiner relativ guten Wärmeleitung ist Lehmputz besonders für die die Oberfläche der Grundplatte mit den Kapillarrohren abdeckende Schicht geeignet. Der Lehmputz bildet eine diffusionsoffene, also "dampfdurchlässige" Beschichtung und unterstützt die Grundplatte Feuchtigkeit aufzunehmen und wieder abzugeben. Für die Lehmputzschicht wird bevorzugt ein Lehm verwendet, der zumindest Tonminerale (bevorzugt dreischichtige Tonminerale) und zumindest einen mineralischen, hygroskopischen Zuschlagstoff, z. B. Kalziumsilikatmehl oder Gasbetonmehl aufweist. Dabei geht die Erfindung von der Erkenntnis aus, dass sich die Feuchteaufnahmekapazität des Lehmputzes deutlich erhöhen lässt, wenn die in herkömmlichem Lehmputz neben den Tonmineralen üblichen inerten Bestandteile (Sand und Schluff) vollständig oder teilweise durch hygroskopisches Mineralstoffmehl ersetzt werden, welches ebenfalls hohe Mengen an Feuchtigkeit aufnehmen kann. Der mineralische Zuschlagstoff gewährleistet eine sehr schnelle Feuchteaufnahme bei Kondensatanfall und nach Ende der Kühlphase entzieht er der Grundplatte kontinuierlich Feuchte, um diese wieder an den Raum zurückzuleiten. Dabei kann bevorzugt ein Gasbetonmehl und/oder Kalziumsilikatmehl mit einer Körnung von 0,02 - 1,5, vorzugsweise 0,05 - 1 mm verwendet werden. Gasbetonmehl kann dabei ca. 150 % des Eigengewichts an Feuchte aufnehmen, Kalziumsilikatmehl sogar mehr als 250 %. Der Lehmputz wird folglich besonders bevorzugt aus Tonmineral bzw. Tonmineralen, zumindest einem hygroskopischen Baustoffmehl und Ziegelmehl oder einem vergleichbaren Zuschlag gefertigt. Bevorzugt weist die pulverförmige Ausgangsmischung des Lehmputzes 10 % - 20 %, vorzugsweise 15 % - 18 % Tonminerale, vorzugsweise bentonitische oder smektitische oder andere dreischichtige Tonminerale auf. Außerdem weist der Lehmputz bzw. die Ausgangsmischung vorzugsweise 40 % - 80 %, besonders bevorzugt 50 % - 70 % (z. B. etwa 60 %) Mineralschaummehl bzw. Baustoffmehl auf. Der Rest besteht aus Ziegelmehl oder einem vergleichbaren Mehl, vorzugsweise mit einer Körnung von 0,2 - 3 mm, z. B. 0,5 - 2 mm. Dieser bevorzugt eingesetzte Lehmputz kann sehr große Mengen an Kondensat aufnehmen. Außerdem ist er durch den Zusatz des Mineralschaummehls stark basisch, so dass Schimmelbildung vermieden wird. (Kalziumsilikatmehl ca. pH 14, Porenbetonmehl ca. pH 11). Ein Lehmputz mit dem oben beschriebenen Zusatz von Gasbetonmehl erhöht die Feuchteaufnahmekapazität gegenüber herkömmlichen Lehmputz (aus Tonmineralen, inertem Schluff und Sand) um zumindest 350 %. Bei einem Zusatz von Kalziumsilikatmehl lässt sich die Feuchteaufnahmekapazität um mindestens 500 % erhöhen. Vorteilhaft ist darüber hinaus, dass ein solcher Lehmputz selbst bei hohem Kondensatanfall nicht weich wird und nicht quillt, so dass eine hohe Haltbarkeit auch unter extremen Bedingungen gewährleistet ist.

Nach einer weiteren bevorzugten Ausführungsform der Erfindung ist die Grundplatte zur Decke oder Wand hin mit einem Lehmkleber an dem Untergrund befestigt. Durch den Lehmkleber wird der Feuchtigkeitsaustausch mit dem der Grundplatte benachbarten Untergrund der Wand oder der Decke unterstützt.

Alternativ oder ergänzend ist die Grundplatte mit den Kapillarrohren und ggf. der abdeckenden Schicht zur Decke oder Wand hin mit dem Untergrund verschraubt oder verdübelt. Es liegt im Übrigen im Rahmen der Erfindung, eine Zwischendecke einzuziehen bzw. die Kühlelemente an einer Zwischendecke bzw. einer abgehängten Decke zu befestigen. Damit lässt sich der Raum sehr gut belüften. Sofern eine abgehängte Decke verwendet wird, erfolgt die Befestigung in der Regel durch Schrauben bzw. Dübel.

Die Kapillarrohre bzw. Kapillarrohrmatten werden bevorzugt mit einem Kleber an der Grundplatte bzw. in den Nuten fixiert. Ein solcher Kleber kann z. B. mit einer Auftragsstärke von 1 mm - 5 mm, vorzugsweise 2 mm - 3 mm zum Einsatz kommen. Bevorzugt handelt es sich dabei um einen Kleber auf Lehmbasis. Bevorzugt wird ein Kleber auf Lehmbasis mit dreischichtigen Tonmineralien, z. B. bentonitischen oder montmorillionitischen Tonmineralien eingesetzt, der sich durch hohe Klebekraft auszeichnet. Dabei kann der Kleber bzw. die trockene Ausgangsmischung z. B. 20 % - 40 %, z. B. 25 % - 30 % (montmorillionitisches) Tonmineral und darüber hinaus Schluff und Sand (oder alternativ Ziegelmehl) aufweisen, z. B. in einer Körnung von 0,25 - 1 mm. Der Anteil des Schluffs in der trockenen Ausgangsmischung kann z. B. 20 % - 40 %, z. B. etwa 30 % und der Anteil des Sandes z. B. 30 % - 50 %, vorzugsweise in etwa 40 % betragen. Dabei kann es vor dem Hintergrund der Tatsache, dass die Grundplatte hygroskopisch ist, zweckmäßig sein, vor dem Verkleben der Kapillarrohre eine Grundierung (z. B. auf Lehmbasis) auf die Kapillarrohre bzw. Kapillarrohrmatte und/oder auf die Grundplatte aufzubringen.

Besonders bevorzugt werden das Zuflussrohr und ggf. auch das Abflussrohr mit einem Fugenfüller bzw. Füllstoff umgeben. Dabei ist der Fugenfüller vorzugsweise in seiner Dichte an die Dichte der Grundplatte angepasst. Dabei ist zu berücksichtigen, dass das Zuflussrohr und ggf. das Abflussrohr seitlich versetzt neben der Grundplatte angeordnet sein können. Im Zuge der Montage entstehen zwischen den einzelnen Temperierelementen bzw. zwischen den Grundplatten Fugen, die (aus bauphysikalischen Überlegungen) bevorzugt mit einem Fugenfüller ausgefüllt werden, und zwar besonders bevorzugt auch in dem Bereich, in dem das Zuflussrohr und ggf. das Abflussrohr angeordnet sind. Der Fugenfüller soll vorzugsweise eine deutlich geringere Dichte als der Putz bzw. Lehmputz besitzen. Im Vordergrund steht dabei eine hohe Dämmwirkung des Fugenfüllers, damit im Bereich der Kapillarrohre und insbesondere im Bereich des Vorlaufs bei sehr niedrigen Temperaturen der Anfall von Kondensat reduziert wird. Diese Dämmeigenschaft lässt sich z. B. dadurch realisieren, dass der Fugenfüller einen geeigneten Dämmstoff, z. B. ein Schaumglasgranulat aufweist. So weist der Fugenfüller bevorzugt Tonminerale, z. B. 10 % - 25 %, vorzugsweise 15 % - 20 % Tonminerale auf, um die Klebewirkung zu gewährleisten. Außerdem weist der Fugenfüller vorzugsweise ein Mineralschaummehl (z. B. Kalziumsilikatmehl und/oder Gasbetonmehl) und bevorzugt ein Dämmstoffgranulat, z. B. ein Schaumglasgranulat auf. Der Anteil des Mineralschaummehls kann 10 % - 30 %, z. B. 15 % - 25 % (beispielsweise etwa 20 %) betragen. Der Anteil des Schaumglasgranulats kann 40 % bis 80 %, z. B. 50 % bis 70 %, z. B. in etwa 60 % betragen. Die Körnung des Schaumglasgranulats kann 0,5 - 4 mm, vorzugsweise 1 mm - 3 mm betragen. Insofern wird ein Dämmstoffgranulat, z. B. Schaumglasgranulat, mit einer Dichte von 200 - 400, vorzugsweise 250 - 350 kg/m³ eingesetzt. Insgesamt weist der Fugenfüller eine Gesamttrockenrohdichte von 400 - 700, vorzugsweise 500 - 600 kg/m³ auf, so dass er die Eigenschaft eines Dämmstoffes aufweist. Zugleich gewährleisten die Tonminerale und das Mineralschaummehl in einem Gesamtanteil von z. B. 30 % - 50 % eine hohe Feuchteaufnahmekapazität. Damit zeichnet sich der erfindungsgemäße Fugenfüller nicht nur durch eine hohe Dämmwirkung, sondern auch durch hohe Feuchteaufnahmekapazität aus. Es handelt sich bevorzugt um einen plastischen, spritzbaren Fugenfüller.

Im Zusammenhang mit dem Zuflussrohr kann es im Übrigen vorteilhaft sein, dieses gegenüber den Kapillarrohren abgesenkt bezogen auf die Oberfläche der Grundplatte anzuordnen. Dabei geht die Erfindung von der Erkenntnis aus, dass sich beim Kühlen der Kondensatanfall in besonderem Maße um das Zulaufrohr konzentriert, denn die Temperatur des Kühlmediums soll im Vorlauf ca. 1° bis 2° niedriger liegen als in den Kapillaren. Aus diesem Grund ist es zweckmäßig, den Vorlauf - bezogen auf die Oberfläche der Grundplatte - tiefer zu legen. In Verbindung mit der Lehmputzschicht und/oder dem beschriebenen Fugenfüller und der auf diese Weise erzielten Dämmung kann der Kondensatanfall im Bereich des Zulaufes weiter reduziert werden.

Der Taupunkt der Raumluft bzw. der bei der Belüftung des Raums von außen zugeführten Zuluft kann größer als 25° C sein und die Kühltemperatur an der Oberfläche des Kühlelementes kann kleiner als 25° C sein, z. B. kleiner als 23° C.

Insgesamt hat die Erfindung erkannt, dass sich das beschriebene Temperierelement als Kühlelement zur Kühlung in Regionen mit sehr hohen Temperaturen (z. B. > 35° C) und sehr hoher Luftfeuchtigkeit (z. B. > 70 %) einsetzen lässt. Das Kühlmedium kann niedrige Temperaturen aufweisen, die (weit) unterhalb des Taupunktes (der von außen zugeführten Zuluft) liegen. So liegt z. B. an feucht- heißen Tagen und/oder in meernahen Regionen aufgrund der hohen relativen Luftfeuchte der Taupunkt deutlich über 25° C, so dass sich bei einer Kühltemperatur von 20° C - 22° C große Kondensatmengen bilden. Erfindungsgemäß lassen sich diese großen Kondensatmengen schnell aufnehmen und speichern. Zugleich ist das Temperierelement in der Lage, die gespeicherte Feuchte in den Zeitphasen, in denen keine aktive (energieverbrauchende) Kühlung erforderlich ist, wieder abzugeben, so dass während dieser Verdunstung die Räume passiv gekühlt werden (adiabatische Kühlung). Dieses gelingt mit dem erfindungsgemäßen Temperierelement, und zwar ohne dass ein Befall mit Schimmelpilzen oder anderen biologischen Schädlingen zu befürchten ist. Damit kann dann erfindungsgemäß in Regionen mit hohem Kühlbedarf auf die bislang eingesetzten klassischen Klimageräte verzichtet werden, so dass insgesamt eine energetisch besonders günstige Kühlung auch unter schwierigsten klimatischen Bedingungen möglich ist, und zwar bei gleichzeitiger Schaffung eines angenehmen Raumklimas. Die passive Kühlung trägt im Übrigen sehr zur Energiereduzierung bei und verstärkt den Wohlfühleffekt (Behaglichkeit).

Das Temperierelement zeichnet sich im Übrigen durch einfache und kostengünstige Fertigung und Montage aus. So lässt sich das Temperierelement insbesondere als vorgefertigtes Fertigelement bzw. Fertigmodul zur Verfügung stellen. Dabei besteht grundsätzlich die Möglichkeit, das Temperierelement mit Grundplatte, Kapillarrohren und abdeckender Schicht (z. B. Lehmputz) als vorgefertigtes Modul bzw. Fertigelement zur Verfügung zu stellen. Alternativ liegt es jedoch bevorzugt im Rahmen der Erfindung, zunächst die Grundplatte mit den daran befestigten Kapillarrohren (einschließlich Zuflussrohr und Abflussrohr) als vorgefertigtes Modul/Fertigelement (ohne Lehmputzschicht) zur Verfügung zu stellen. Diese vorgefertigten Elemente werden dann an der Decke bzw. an der Wand (und folglich am Untergrund) befestigt. Anschließend können die Fugen zwischen den einzelnen Elementen bzw. zwischen den einzelnen Grundplatten mit einem Fugenfüller ausgefüllt werden und dabei werden dann bevorzugt auch das Zuflussrohr und das Abflussrohr in den Fugenfüller eingebettet. Anschließend kann dann die gesamte Oberfläche mit der abdeckenden Schicht (z. B. dem Lehmputz) versehen werden. Ein solcher (montierter) Deckenaufbau bzw. Wandaufbau ist ebenfalls Gegenstand der Erfindung.

Sämtliche Angaben zu Anteilen bzw. Zusammensetzungen der verwendeten Materialien beziehen sich auf das jeweilige Gewicht, und zwar auf das Gewicht der Trockenrohware, die anschließend durch Zugabe von Wasser zu dem Lehmputz bzw. Fugenfüller oder Lehmkleber verarbeitet wird. Der auf diese Weise hergestellte Lehm bzw. Lehmputz oder Fugenfüller oder Kleber trocknet anschließend an der Luft.

Das beschriebene System mit den erfindungsgemäßen Kühlelementen lässt sich vollständig mit erneuerbaren Energien und damit CO₂-neutral betreiben.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine räumliche Darstellung im Ausriss eines Temperierelementes für Decken oder Wände eines zu temperierenden Raumes;
- Figur 2:: eine Seitenansicht des Temperierelementes von Figur 1 entlang der Linie II - II geschnitten in vergrößerter Darstellung;
- Figur 3:: eine räumliche Darstellung im Ausriss eines weiteren Temperierelementes mit in Nuten geführten Kapillarrohren, und
- Figur 4:: eine Seitenansicht des Temperierelementes von Figur 3 entlang der Linie IV - IV geschnitten in vergrößerter Darstellung,
- Figur 5:: eine Seitenansicht im Schnitt eines weiteren Temperierelementes und
- Fig. 6: einen Deckenaufbau mit mehreren montierten Temperierelementen.

### Beschreibung bevorzugter Ausführungsformen

Ein Temperierelement 1 besteht im Wesentlichen aus einer Grundplatte 2, Kapillarrohren 3 und aus einer abdeckenden Schicht 4.

Das Temperierelement 1 ist zur Anordnung an einer Decke oder Wand eines zu temperierenden Raumes vorgesehen. Die Grundplatte 2 ist aus einem hygroskopischen Material ausgebildet. Bevorzugt wird die Grundplatte 2 aus Kalziumsilikat ausgebildet. Eine Ausbildung der Grundplatte 2 aus Porenbeton (Gasbeton) ist aber grundsätzlich auch möglich.

Die Grundplatte 2 wird mit ihrer Rückfläche 5 auf einen Untergrund 6, der Teil einer Decke oder einer Wand eines zu temperierenden Raumes ist, aufgebracht. Auf ihrer dem Untergrund 6 und ihrer Rückfläche 5 abgewandten Oberfläche 7 weist die Grundplatte 2 die Kapillarrohre 3 auf.

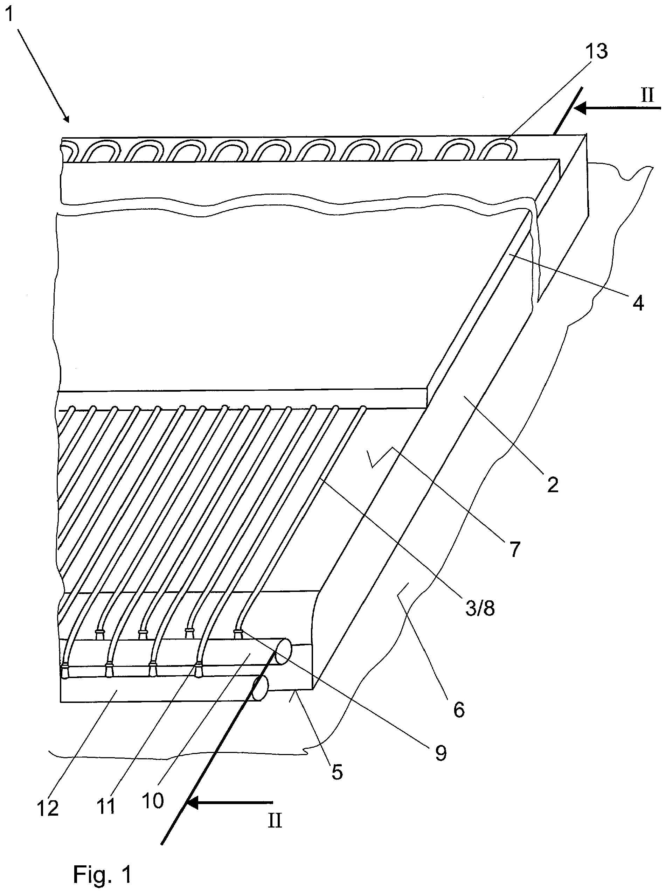

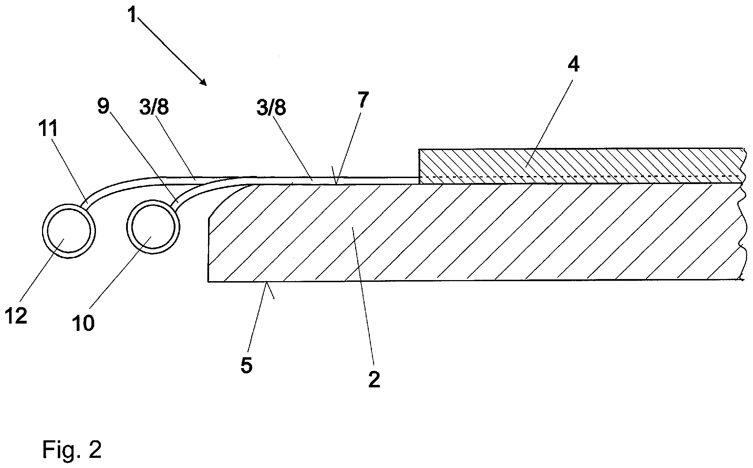

Entsprechend dem Ausführungsbeispiel der Figur 1 und 2 sind die Kapillarrohre 3, die beispielsweise eine zusammenhängende Matte 8 bilden, direkt auf der Oberfläche 7 fixiert. Die Fixierung der Kapillarrohre 3 kann beispielsweise durch Aufkleben oder nicht dargestellte seitliche Führungselemente, z.B. Stifte oder kammförmig ausgebildete Fixierleisten, erfolgen. Die wesentlichen parallel zueinander verlaufende Kapillarrohre 3 sind an ihrem Zuflussende 9 mit einem Zuflussrohr 10 verbunden.

Das Zuflussrohr 10 verläuft im Wesentlichen quer zur Längsrichtung der Kapillarrohre 3. An ihrem Abflussende 11 sind die Kapillarrohre 3 mit einem Abflussrohr 12 verbunden. Das Zuflussrohr 10 und das Abflussrohr 12 verlaufen parallel zueinander.

Entsprechend den Ausführungsbeispielen der Figuren 1 bis 4 weisen die Kapillarrohre 3 an einem Ende der Grundplatte 2 u-förmige Schleifen 13 auf, so dass am gegenüberliegenden anderen Ende das Zuflussrohr 10 und das Abflussrohr 12 parallel nebeneinander angeordnet sind. Die die Kapillarrohre 3 aufweisende Oberfläche 7 der Grundplatte 2, wie auch die Kapillarrohre 3 selbst, sind von der abdeckenden Schicht 4 abgedeckt. Dabei ist die abdeckende Schicht 4 als eine Lehmputzschicht ausgebildet. Weiterhin ist die Grundplatte 2 an ihrer Rückfläche 5 mit einem Lehmkleber an dem Untergrund 6 befestigt. Zusätzlich ist das Temperierelement 1 mit Grundplatte 2, Kapillarrohren 3 und der abdeckenden Schicht 4 mit dem Untergrund 6 verschraubt oder verdübelt (die Verschraubungen sind den Ausführungsbeispielen nicht dargestellt).

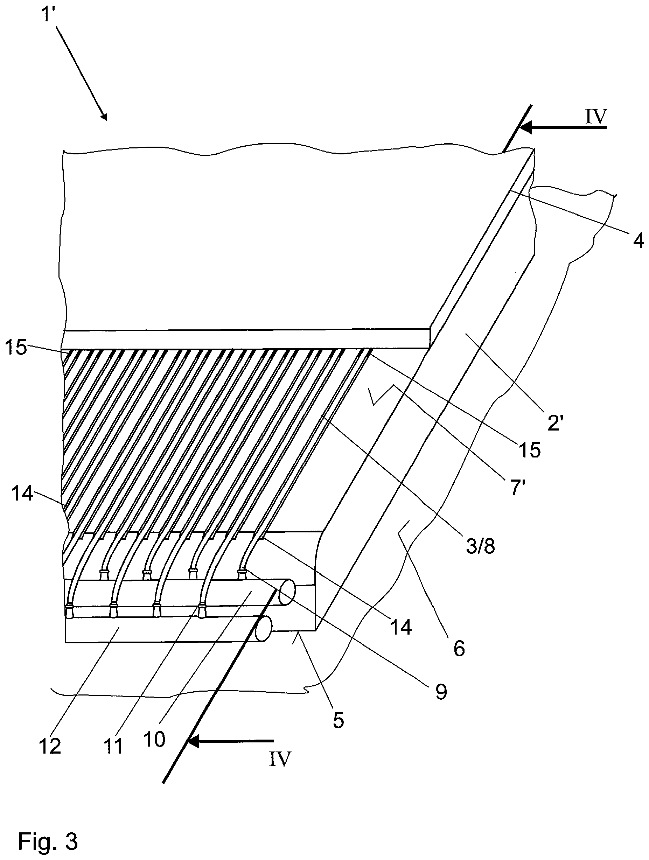

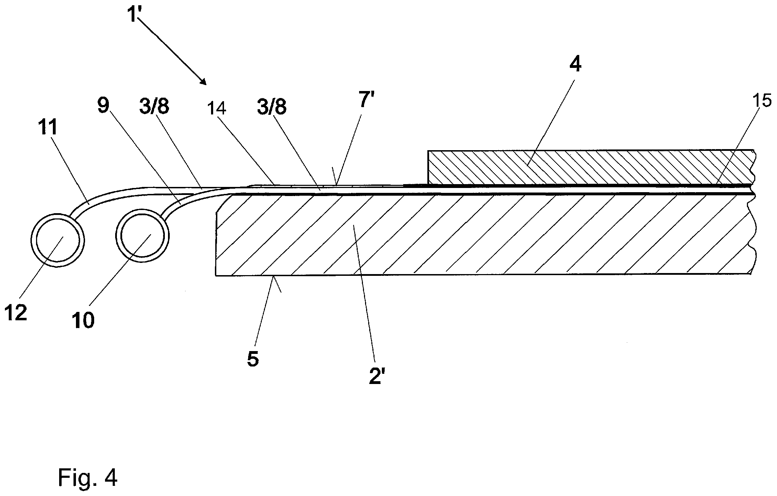

Gemäß den Ausführungsbeispielen der Figuren 3 und 4 weist die Grundplatte 2' des Temperierelementes 1' auf ihrer dem Raum zugewandten Oberfläche 7' Ausformungen auf, die die Kapillarrohre 3 oder die Matte 8 mindestens teilweise aufnehmen. Bei parallel zueinander angeordneten Kapillarrohren 3 sind die Ausformungen als entsprechende parallele Nuten 14 ausgebildet. Die Kapillarrohre 3 können in den Nuten 14 durch einen Kleber 15 befestigt sein. Dabei kann es sich bevorzugt um einen Kleber auf Lehmbasis handeln. Bevorzugt werden zunächst die Kapillarrohre in die vorbereiteten Nuten eingelegt bzw. eingedrückt. Anschließend kann dann die Fixierung erfolgen, in dem der Kleber 15 bzw. Lehmkleber aufgebracht wird. Der Kleber kann so aufgetragen werden, dass die Kapillarrohre gleichsam in den Kleber eingebettet sind, jedoch um ein gewisses Maß aus dem Kleber bzw. der Kleberschicht herausragen.

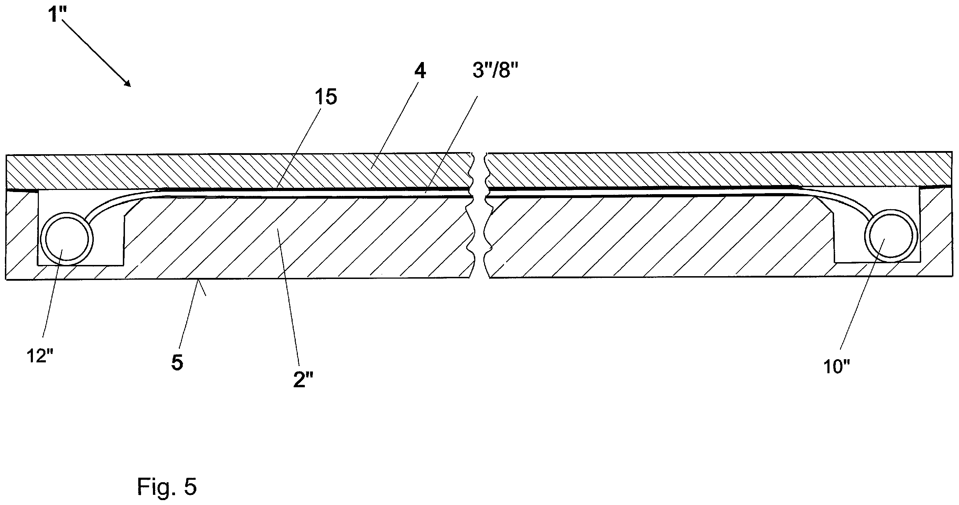

Gemäß dem Ausführungsbeispiel der Figur 5 weist die Grundplatte 2" des Temperierelementes 1" die als Matten 8" ausgebildeten Kapillarrohre 3" auf, die an ihren Zuflussenden 9" mit dem quer verlaufenden Zuflussrohr 10" und an ihren Abflussenden 11" mit dem quer verlaufenden Abflussrohr 12" verbunden sind.

Zur Montage eines Temperierelementes 1, 1', 1" wird die Matte 8, 8" mit den Kapillarrohren 3, 3" auf der Oberfläche 7, 7' der Grundplatte 2, 2', 2" fixiert. Dazu können die Kapillarrohre bzw. die Kapillarrohrmatten mit einem Kleber 15 an der Grundplatte bzw. in den Nuten verklebt werden. Die abdeckende Schicht 4 wird als Lehmputz auf die Oberfläche 7, 7' der Grundplatte 2, 2', 2" aufgebracht. Gegebenenfalls kann zwischen der Grundplatte 2, 2', 2" und der abdeckenden Schicht 4 noch ein nicht dargestelltes Armierungsgewebe angeordnet werden. Nach dem Trocknen des Temperierelementes 1, 1', 1" wird auf die Rückfläche 5 der Grundplatte 2, 2' ein Lehmkleber aufgebracht und das Temperierelement wird mit dem Untergrund 6 verklebt. Alternativ oder zusätzlich wird das Temperierelement 1, 1' mit dem Untergrund 6 verschraubt.

Im Übrigen ist in den Figuren erkennbar, dass das Zuflussrohr 10, 10" und ggf. auch das Abflussrohr 12, 12" gegenüber dem Kapillarrohren 3 abgesenkt ist, und zwar bezogen auf die Oberfläche 7 der Grundplatte 2. Das Zuflussrohr (und ggf. auch das Abflussrohr) ist folglich tiefer angeordnet als die Kapillarrohre, so dass insbesondere im Bereich des Vorlaufs mit sehr niedrigen Temperaturen eine erhöhte Dämmwirkung mit entsprechender Reduzierung des Kondensatanfalls erreicht wird.

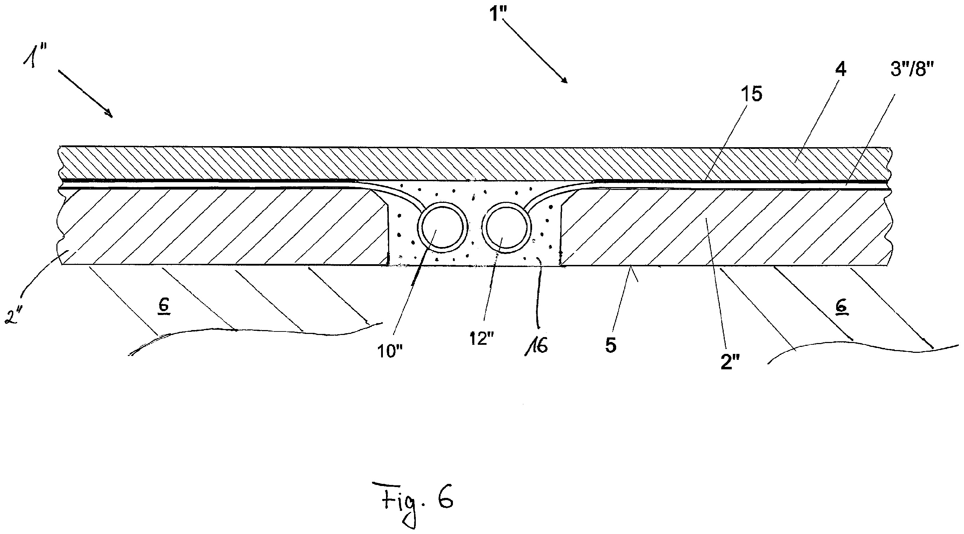

In den Figuren 1 - 5 ist das Temperierelement als Kühlelement mit der auf die Grundplatte aufgebrachten Lehmputzschicht 4 dargestellt. In der Praxis werden eine Vielzahl solcher Elemente an der Decke bzw. Wand und folglich auf dem Untergrund 6 montiert. Diese Situation ist in Fig. 6 dargestellt. Bei diesen Elementen sind Zuflussrohr 10, 10" und Abflussrohr 12, 12" nicht in die Grundplatte eingelegt, sondern sie sind seitlich neben der Grundplatte 2, 2', 2" angeordnet, so wie dieses z. B. auch bei der Ausführungsform nach den Fig. 1 bis 4 der Fall ist. Die Anordnung nach Fig. 6 kann unabhängig davon realisiert werden, ob die Kapillarrohre einzeln oder als Kapillarrohrmatten vorliegen und unabhängig davon, ob Zuflussrohr und Abflussrohr auf einer Seite eines Elementes oder auf gegenüberliegenden Seiten angeordnet sind. Die zwischen den Elementen entstehenden Fugen werden bevorzugt mit einem Fugenfüller verfüllt, der dann insbesondere auch die im Bereich der Fugen angeordneten Zuflussrohre und Abflussrohre umgibt. Dieses ist in Figur 6 dargestellt. Es ist dabei vorteilhaft, insbesondere das Zuflussrohr 10, 10" mit einem wärmedämmenden Fugenfüller 16 zu ummanteln, um den Kondensatanfall in diesem besonders kalten Bereich des Kühlelementes zu reduzieren.

In der Praxis ist es zweckmäßig, zunächst die Grundplatte 2 mit den daran befestigten Kapillarrohren 3, 3" bzw. Kapillarrohrmatten 8, 8" am Untergrund 6 zu befestigen und anschließend die Fugen zwischen den Grundplatten mit dem Fugenfüller 16 zu verfüllen. Danach kann die gesamte Oberfläche einheitlich mit der abdeckenden Schicht 4, z. B. dem Lehmputz verkleidet werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben, im Rahmen der Erfindung, die in den beigefügten Ansprüchen definiert ist.

### Bezugszeichenliste

- 1, 1', 1": Temperierelement
- 2, 2', 2": Grundplatte
- 3, 3": Kapillarrohr
- 4: abdeckende Schicht
- 5: Rückfläche von 2
- 6: Untergrund
- 7, 7': Oberfläche von 2
- 8: Matte
- 9, 9": Zuflussende von 3
- 10, 10": Zuflussrohr
- 11, 11": Abflussende von 3
- 12, 12": Abflussrohr
- 13: u-förmige Schleife
- 14: Nut von 2'
- 15: Kleber
- 16: Fugenfüller

## Patentansprüche

1. Verfahren zum Kühlen eines Raumes mit einem an einer Decke oder einer Wand des zu kühlenden Raumes angeordneten Kühlelement (1, 1', 1"), mit einer wärmedämmenden Grundplatte (2, 2', 2"), die auf ihrer dem Raum zugewandten Oberfläche (7, 7') fixierte Kapillarrohre (3, 3") aufweist, durch die ein Kühlmedium leitbar ist, und mit einer die Oberfläche (7, 7') der Grundplatte (2, 2', 2") mit den Kapillarrohren (3, 3") abdeckenden Schicht (4), wobei die Grundplatte (2, 2', 2") aus einem hygroskopischen Material ausgebildet ist, **dadurch gekennzeichnet, dass** mit der Kühltemperatur der Taupunkt unterschritten wird und das dabei entstehende Kondensat von der Grundplatte und der abdeckenden Schicht aufgenommen und bei abgeschalteter Kühlung wieder abgegeben wird.

2. Verfahren nach Anspruch 1, **dadurch gekennzeichnet, dass** die Grundplatte (2, 2', 2") aus Kalziumsilikat ausgebildet ist.

3. Verfahren nach Anspruch 1,**dadurch gekennzeichnet, dass** die Grundplatte (2, 2', 2") aus Porenbeton ausgebildet ist.

4. Verfahren nach einem der Ansprüche 1 bis 3, **dadurch gekennzeichnet, dass** die Grundplatte (2', 2") auf ihrer dem Raum zugewandten Oberfläche (7') Ausformungen aufweist, die die Kapillarrohre (3', 3") mindestens teilweise aufnehmen.

5. Verfahren nach Anspruch 4, **dadurch gekennzeichnet, dass** die Ausformungen als parallele Nuten (14) ausgebildet sind.

6. Verfahren nach einem der Ansprüche 1 bis 5, **dadurch gekennzeichnet, dass** die Kapillarrohre (3, 3") als Matten (8, 8") ausgebildet sind, deren parallele Kapillarrohre (3, 3") an ihren Zuflussenden (9, 9") mit einem quer verlaufenden Zuflussrohr (10, 10") und an ihren Abflussenden (11, 11") mit einem quer verlaufenden Abflussrohr (12, 12") verbunden sind.

7. Verfahren nach Anspruch 6, **dadurch gekennzeichnet, dass** die Kapillarrohre (3) an einem Ende der Grundplatte (2, 2') u-förmige Schleifen (13) bilden und am gegenüberliegenden anderen Ende das Zuflussrohr (10) und das Abflussrohr (12) parallel nebeneinander verlaufen.

8. Verfahren nach einem der Ansprüche 1 bis 7, **dadurch gekennzeichnet, dass** die die Kapillarrohre (3, 3") aufweisende Oberfläche (7, 7') der Grundplatte (2, 2', 2") mit einer Schicht (4) abgedeckt ist, die als eine Lehmputzschicht ausgebildet ist.

9. Verfahren nach Anspruch 8, **dadurch gekennzeichnet, dass** die Lehmputzschicht aus einem Lehm gefertigt ist, der zumindest Tonminerale und ein hygroskopisches Baustoffmehl bzw. Mineralstoffmehl, z. B. Kalziumsilikatmehl und/oder Gasbetonmehl, aufweist.

10. Verfahren nach einem der Ansprüche 1 bis 9, **dadurch gekennzeichnet, dass** die Grundplatte (2, 2', 2") zur Decke oder Wand hin mit einem Lehmkleber an dem Untergrund (6) befestigt ist.

11. Verfahren nach einem der Ansprüche 1 bis 9, **dadurch gekennzeichnet, dass** die Grundplatte (2, 2', 2") mit den Kapillarrohren (3, 3") und der abdeckenden Schicht (4) zur Decke oder Wand hin mit dem Untergrund (6) verschraubt oder verdübelt ist.

12. Verfahren nach einem der Ansprüche 1 bis 11, **dadurch gekennzeichnet, dass** die Kapillarrohre (3, 3") mit einem Kleber (15) an der Grundplatte (2, 2', 2"), z. B. in den Ausformungen bzw. Nuten (14) befestigt sind.

13. Verfahren nach Anspruch 12, **dadurch gekennzeichnet, dass** die Kapillarrohre (3, 3") bzw. die Kapillarrohrmatten mit einem als Lehmkleber ausgebildeten Kleber (15) an der Grundplatte bzw. in den Nuten befestigt sind, der Tonminerale, vorzugsweise bentonitische und/oder montmorillionitische Tonminerale enthält.

14. Verfahren nach einem der Ansprüche 1 bis 13, **dadurch gekennzeichnet, dass** Zuflussrohr (10, 10") und ggf. das Abflussrohr (12, 12") mit einem Fugenfüller (16) umgeben ist.

15. Verfahren nach Anspruch 14, **dadurch gekennzeichnet, dass** der Fugenfüller (16) aus Tonmineralen und einem Mineralschaummehl und ggf. einem Schaumglasgranulat gefertigt ist.

16. Verfahren nach einem der Ansprüche 1 bis 15, **dadurch gekennzeichnet, dass** zumindest das Zuflussrohr (10, 10") gegenüber dem Kapillarrohren (3) abgesenkt - bezogen auf die Oberfläche (7) der Grundplatte (2) - ist.

17. Verfahren nach einem der Ansprüche 1 bis 16, wobei ein Zwischenraum zwischen zwei benachbarten Grundplatten, in welchem bevorzugt Zuflussrohr und/oder Abflussrohr angeordnet sind, mit einem Fugenfüller ausgefüllt ist.

## Claims

1. A method for cooling a room with a cooling element (1, 1', 1") that is arranged on a ceiling or a wall of the room to be cooled, with a heat-insulating base plate (2, 2', 2") comprising capillary tubes (3, 3") that are fixed on its surface (7, 7') facing the room and through which a cooling medium can be conveyed, and with a layer (4) that covers the surface (7, 7') of the base plate (2, 2', 2") with the capillary tubes (3, 3"), wherein the base plate (2, 2', 2") is made of a hygroscopic material,
**characterized in that** the cooling temperature falls short of the dew point and the thusly produced condensate is absorbed by the base plate and the covering layer and once again released when the cooling system is switched off.

2. The method according to claim 1, **characterized in that** the base plate (2, 2', 2") is made of calcium silicate.

3. The method according to claim 1, **characterized in that** the base plate (2, 2', 2") is made of aerated concrete.

4. The method according to one of claims 1 to 3, **characterized in that** the base plate (2', 2") comprises recesses, which at least partially accommodate the capillary tubes (3', 3"), on its surface (7') facing the room.

5. The method according to claim 4, **characterized in that** the recesses are realized in the form of parallel grooves (14) .

6. The method according to one of claims 1 to 5, **characterized in that** the capillary tubes (3, 3") are realized in the form of mats (8, 8"), the parallel capillary tubes (3, 3") of which are connected to a transversely extending inflow pipe (10, 10") on their inflow ends (9, 9") and to a transversely extending outflow pipe (12, 12") on their outflow ends (11, 11").

7. The method according to claim 6, **characterized in that** the capillary tubes (3) form u-shaped loops (13) on one end of the base plate (2, 2') and the inflow pipe (10) and the outflow pipe (12) extend adjacent to one another in a parallel manner on the other opposite end.

8. The method according to one of claims 1 to 7, **characterized in that** the surface (7, 7') of the base plate (2, 2', 2"), which comprises the capillary tubes (3, 3"), is covered with a layer (4) that is realized in the form of a loam rendering layer.

9. The method according to claim 8, **characterized in that** the loam rendering layer is made of a loam that comprises at least clay minerals and a hygroscopic construction material powder or mineral powder, e.g. calcium silicate powder and/or aerated concrete powder.

10. The method according to one of claims 1 to 9, **characterized in that** the base plate (2, 2', 2") is fastened on the substructure (6) with a loam adhesive toward the ceiling or wall.

11. The method according to one of claims 1 to 9, **characterized in that** the base plate (2, 2', 2") with the capillary tubes (3, 3") and the covering layer (4) is screwed or doweled to the substructure (6) toward the ceiling or wall.

12. The method according to one of claims 1 to 11, **characterized in that** the capillary tubes (3, 3") are fastened on the base plate (2, 2', 2") with an adhesive (15), e.g. in the recesses or grooves (14).

13. The method according to claim 12, **characterized in that** the capillary tubes (3, 3") or the capillary tube mats are fastened on the base plate or in the grooves with an adhesive (15) that is realized in the form of a loam adhesive and contains clay minerals, preferably bentonitic or montmorillionitic clay minerals.

14. The method according to one of claims 1 to 13, **characterized in that** the inflow pipe (10, 10") and optionally the outflow pipe (12, 12") is surrounded with a joint filler (16).

15. The method according to claim 14, **characterized in that** the joint filler (16) is made of clay minerals and a mineral foam powder and optionally a foam glass granulate.

16. The method according to one of claims 1 to 15, **characterized in that** at least the inflow pipe (10, 10") is lowered relative to the capillary tubes (3) - referred to the surface (7) of the base plate (2).

17. The method according to one of claims 1 to 16, **characterized in that** an intermediate space between two adjacent base plates, in which the inflow pipe and/or the outflow pipe preferably are arranged, is filled with a joint filler.

## Revendications

1. Procédé, destiné à refroidir une pièce à l'aide d'un élément de refroidissement (1, 1', 1") placé sur un plafond ou sur une paroi de la pièce qui doit être refroidie, pourvu d'une plaque d'embase (2, 2', 2") calorifuge, qui sur sa surface (7, 7') dirigée vers la pièce comporte des tubes capillaires (3, 3") fixés, à travers lesquels peut être conduit un agent réfrigérant et pourvu d'une couche (4) recouvrant la surface (7, 7') de la plaque d'embase (2, 2', 2") dotée des tubes capillaires (3, 3"), la plaque d'embase (2, 2', 2") étant conçue en une matière hygroscopique,
**caractérisé en ce qu'**avec la température de refroidissement, le point de rosée n'est pas atteint et **en ce que** le produit de condensation généré à cet effet est absorbé par la plaque d'embase et par la couche de couverture et est restitué lorsque le refroidissement est désactivé.

2. Procédé selon la revendication 1, **caractérisé en ce que** la plaque d'embase (2, 2', 2") est conçue en silicate de calcium.

3. Procédé selon la revendication 1, **caractérisé en ce que** la plaque d'embase (2, 2', 2") est conçue en béton poreux.

4. Procédé selon l'une quelconque des revendications 1 à 3, **caractérisé en ce que** sur sa surface (7') dirigée vers la pièce, la plaque d'embase (2', 2") comporte des empreintes, qui réceptionnent au moins en partie les tubes capillaires (3', 3").

5. Procédé selon la revendication 4, **caractérisé en ce que** les empreintes sont conçues sous la forme de rainures (14) parallèles.

6. Procédé selon l'une quelconque des revendications 1 à 5, **caractérisé en ce que** les tubes capillaires (3, 3") sont conçus sous la forme de nattes (8, 8"), dont les tubes capillaires (3, 3") parallèles sont reliés par leurs extrémités d'affluence (9, 9") avec un tube d'affluence (10, 10") s'écoulant à la transversale et sur leurs extrémités d'effluence (11, 11") sont reliés avec un tube d'effluence (12, 12") s'écoulant à la transversale.

7. Procédé selon la revendication 6, **caractérisé en ce que** les tubes capillaires (3) forment sur une extrémité de la plaque d'embase (2, 2') des boucles (13) en forme de U et sur l'autre extrémité opposée, le tube d'affluence (10) et le tube d'effluence (12) s'écoulent côté à côte à la parallèle.

8. Procédé selon l'une quelconque des revendications 1 à 7, **caractérisé en ce que** la surface (7, 7') de la plaque d'embase (2, 2', 2") comportant les tubes capillaires (3, 3") est recouverte d'une couche (4) qui est conçue sous la forme d'une couche de crépi en argile.

9. Procédé selon la revendication 8, **caractérisé en ce que** la couche de crépi en argile est fabriquée dans une argile qui comporte au moins des minéraux argileux et une poudre hygroscopique de matériaux de construction ou de matériaux minéraux, par exemple une poudre de silicate de calcium et/ou une poudre cellulaire.

10. Procédé selon l'une quelconque des revendications 1 à 9, **caractérisé en ce que** la plaque d'embase (2, 2', 2") est fixée sur le support (6) en direction du plafond ou de la paroi à l'aide d'un adhésif à l'argile.

11. Procédé selon l'une quelconque des revendications 1 à 9, **caractérisé en ce que** la plaque d'embase (2, 2', 2") avec les tubes capillaires (3, 3") et la couche (4) de couverture est vissée ou chevillée sur le support (6) en direction du plafond ou de la paroi.

12. Procédé selon l'une quelconque des revendications 1 à 11, **caractérisé en ce que** les tubes capillaires (3, 3") sont fixés à l'aide d'un adhésif (15) sur la plaque d'embase (2, 2', 2"), par exemple dans les empreintes ou les rainures (14).

13. Procédé selon la revendication 12, **caractérisé en ce que** les tubes capillaires (3, 3") ou les nattes de tubes capillaires sont fixé(e)s sur la plaque d'embase ou dans les rainures à l'aide d'un adhésif (15) conçu sous la forme d'un adhésif à l'argile, qui contient des minéraux argileux, de préférence des minéraux argileux bentonitiques et/ou montmorillonitiques.

14. Procédé selon l'une quelconque des revendications 1 à 13, **caractérisé en ce que** le tube d'affluence (10, 10") et le cas échéant le tube d'effluence (12, 12") est entouré d'un mastic pour joints (16).

15. Procédé selon la revendication 14, **caractérisé en ce que** le mastic pour joints (16) est fabriqué en minéraux argileux et en une poudre de mousse minérale et le cas échéant en granulés de verre cellulaire.

16. Procédé selon l'une quelconque des revendications 1 à 15, **caractérisé en ce qu'**au moins le tube d'affluence (10, 10") est rabaissé par rapport aux tubes capillaires (3) (en rapport de la surface (7) de la plaque d'embase (2).

17. Procédé selon l'une quelconque des revendications 1 à 16, un espace intermédiaire entre deux plaques d'embase voisines, dans lequel sont placés de préférence le tube d'affluence et/ou le tube d'effluence est rempli d'un mastic pour joints.
